# FASCICULE DE BREVET EUROPEEN

(11) **EP 3 257 687 B1**
(45) Date de publication et mention de la délivrance du brevet: **05.12.2018**
(21) Numéro de dépôt: 17173910.5
(22) Date de dépôt: 01.06.2017
(51) Int. Cl.: B60B 7/00

(54) **ELEMENT DE ROUE D'UN VEHICULE**
ELEMENT EINES FAHRZEUGRADS
VEHICLE WHEEL ELEMENT

(30) Priorité: 02.06.2016 FR 1655036
(43) Date de publication de la demande: 20.12.2017
(73) Titulaire: NOVARES FRANCE, 92140 Clamart (FR)
(72) Inventeur: HUGUET, Guillaume, 01250 Chavannes sur Suran (FR); TUNCA, Ibrahim, 01130 Nantua (FR)
(74) Mandataire: Delorme, Nicolas

(56) Documents cités:
- EP-A2- 0 145 487
- WO-A1-2016/071595
- DE-A1-102011 016 534
- DE-A1-102011 117 088
- FR-A1- 2 699 453
- FR-A1- 2 984 219
- FR-A1- 3 003 200
- JP-U- S6 218 479

## Description

La présente invention concerne un élément de roue d'un véhicule.

D'une manière classique, les véhicules automobiles sont équipés soit de roues en tôle recouvertes par des enjoliveurs, soit de roues en alliage léger présentant une structure esthétique ajourée.

Par roue, on entend un organe mécanique circulaire situé entre un moyeu et un pneu, qui supporte la charge et qui, pivotant autour de son axe, permet au véhicule automobile de se déplacer. La roue possède un voile et une jante.

Lors du roulage, les roues créent des perturbations aérodynamiques en captant des flux d'air. Ces perturbations tendent à augmenter la consommation énergétique du véhicule. Pour optimiser l'aérodynamisme, on connaît, notamment, de rapporter un flasque plein sur la totalité de la surface de la roue.

Lors du déplacement du véhicule, les freins positionnés dans les roues, peuvent s'échauffer. Il est donc nécessaire de les refroidir. La solution usuelle pour refroidir les freins est de faire circuler un flux d'air, au travers de la roue. Ce flux d'air circule autour du frein et permet de le refroidir.

Pour permettre la circulation de ce flux d'air, les roues des véhicules présentent des ouvertures qui, dans certains cas, permettent le passage d'un flux d'air au travers de la roue.

Ainsi, toutes les ouvertures, si elles permettent un bon refroidissement des freins, sont préjudiciables pour l'aérodynamisme.

En conséquence, la présente invention a pour objectif de fournir un élément de roue permettant de garantir le refroidissement des freins, tout en optimisant l'aérodynamisme du véhicule pour en réduire la consommation énergétique. Un élément de roue selon le préambule de la revendication 1 a déjà été décrit dans les demandes de brevet FR 2 984 219 A1, EP 0 145 487 A2, FR 3 003 200 A1, WO 2016/071595 A1, DE 10 2011 016534 A1, DE 10 2011 117088 A1 et FR 2 699 453 A1.

Selon une définition générale, l'invention concerne un élément de roue selon la revendication 1.

En étant positionné en position de fermeture dans le plan du corps de l'élément de roue, le volet mobile permet d'optimiser l'aérodynamisme du véhicule et évite la circulation d'air dans la roue. En position ouverte, l'inclinaison du volet par rapport au plan du corps, permet à un flux d'air de circuler au travers de la roue pour refroidir un dispositif de freinage positionné dans la roue. Ainsi, l'invention propose un élément de roue permettant de garantir le refroidissement des freins, tout en optimisant l'aérodynamisme du véhicule, lors du roulage, pour en réduire la consommation énergétique et ce en utilisant seulement des organes mécaniques dépourvus de systèmes électrique ou électronique. De plus, la présente invention permet avantageusement d'apporter un effet esthétique au véhicule.

L'élément de roue peut comprendre des moyens de liaison pivot du, ou de chaque, volet sur le corps. De plus, les moyens d'actionnement peuvent être adaptés pour faire pivoter le volet en fonction d'un ou plusieurs paramètres du groupe comprenant la vitesse de rotation de la roue et la température ambiante.

Le corps peut comprendre au moins une paroi de support adaptée pour supporter en pivot le, ou chaque, volet.

La ou les parois de support et le ou les volets en position de fermeture peuvent être coplanaires.

Les moyens d'actionnement peuvent comprendre au moins un organe élastique interposé entre le corps et le bras, l'organe élastique pouvant être configuré pour exercer un effort sur le bras pour faire pivoter le volet en position d'ouverture.

L'organe élastique peut être constitué d'un matériau adapté pour se déformer en fonction de la température, faisant pivoter le volet en position d'ouverture à partir d'une température prédéterminée. Selon une disposition particulière, la température prédéterminée peut être supérieure ou égale à 80°C.

Le volet peut présenter une butée de fermeture adaptée pour appuyer sur une surface de butée de fermeture du corps pour arrêter le pivot du volet en position de fermeture.

Le volet peut présenter une butée d'ouverture adaptée pour appuyer sur une surface de butée d'ouverture du corps pour arrêter le pivot du volet en position d'ouverture.

Le corps peut être un élément rapporté sur la roue.

Le corps peut être partie intégrante d'une jante monobloc comprenant un voile.

L'invention porte aussi sur un véhicule automobile comprenant un élément de roue selon l'invention.

D'autres caractéristiques et avantages de l'invention se dégageront de la description qui va suivre, en regard des dessins annexés qui représentent une forme de réalisation de l'invention.
- La figure 1 est une vue d'une face externe d'une roue d'un véhicule, comprenant un élément de roue selon l'invention avec les volets en position de fermeture ;
- La figure 2 est une vue externe d'une roue d'un véhicule, comprenant un élément de roue selon l'invention avec les volets en position d'ouverture ;
- La figure 3 est une vue agrandie de volets selon l'invention en position de fermeture ;
- La figure 4 est une vue agrandie de volets selon l'invention en position d'ouverture ;
- La figure 5 est une vue d'une face interne d'un élément de roue selon l'invention avec les volets en position d'ouverture ;
- La figure 6 est une vue agrandie d'une face interne d'une portion de support et d'un volet selon l'invention ;
- La figure 7 est une vue en coupe agrandie d'un volet selon l'invention en position d'ouverture ;
- La figure 8 est une vue en coupe agrandie d'un volet selon l'invention en position de fermeture.

L'invention concerne un élément de roue 1 adapté pour être fixé à une roue I d'un véhicule II. La roue I comprend une jante sur laquelle est reçu un pneu III et un voile. La roue I définit un plan VI passant par un flanc externe du pneu. Selon le mode de réalisation ici présenté, l'élément de roue 1 est un enjoliveur. Selon un autre mode de réalisation non représenté l'élément de roue 1 peut faire partie intégrante de la jante de la roue I.

L'élément de roue 1 comprend un corps 2.

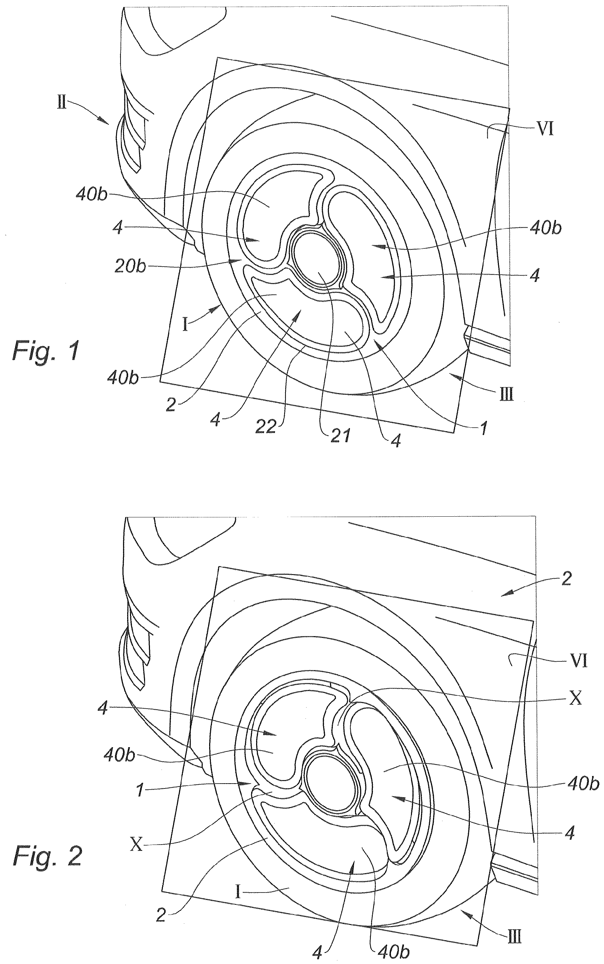

Comme on peut le voir notamment sur les figures 1 et 2, le corps 2 présente sensiblement la géométrie d'un disque adapté pour être positionné sur le voile de la roue I.

De plus, dans le présent document, on définit par face interne, une face destinée à être orientée vers l'intérieur de la roue I, en regard du voile et d'un dispositif de freinage. On définit par face externe une face opposée à la face interne, destinée à être orientée vers l'extérieur de la roue I.

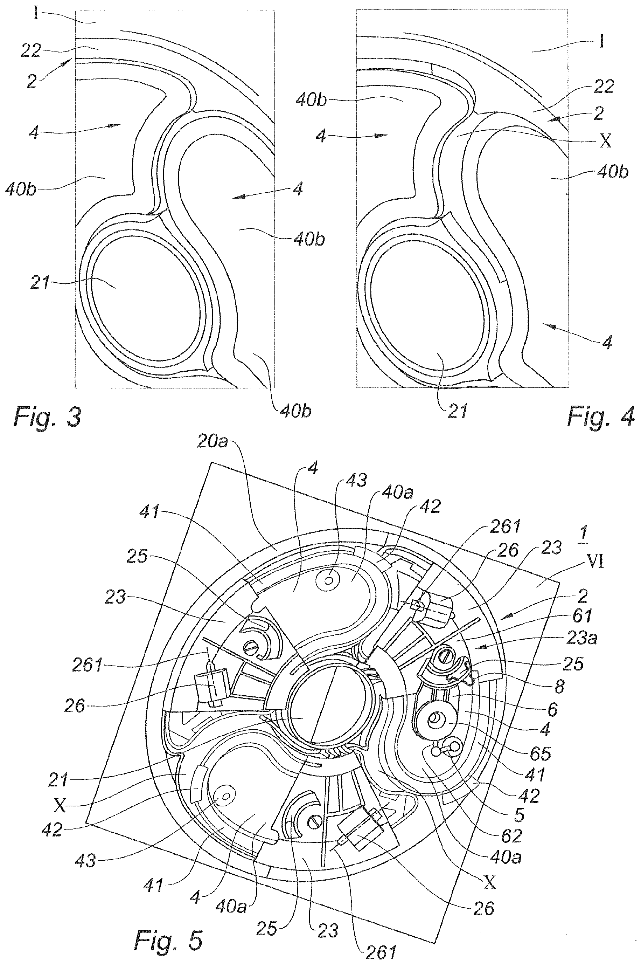

Selon le mode de réalisation ici présenté, en référence à la figure 5, le corps 2 comprend un disque central 21 destiné à recouvrir un moyeu de la roue I. De plus, le corps 2 comprend un anneau extérieur 22 concentrique du disque central 21. L'anneau extérieur 22 et le disque central 21 sont positionnés sensiblement dans un même plan VI de la roue I.

Le corps 2 présente une face interne 20a et une face externe 20b.

Le disque central 21 et l'anneau extérieur 22 sont reliés par plusieurs parois de support 23. Selon le mode de réalisation ici présenté, le corps 2 présente trois parois de support 23. Selon le mode de réalisation ici présenté, chaque paroi de support 23 présente la géométrie d'un secteur circulaire. De plus, selon le mode de réalisation ici présenté, les parois de support 23 sont réparties à équidistance les unes des autres. Les parois de support 23 sont positionnées sensiblement dans un plan parallèle au plan VI de la roue I. Chaque paroi de support 23 présente une face interne 23a et une face externe (non visible sur les figures). La face interne 23a de chaque portion de support 23 présente une chape 25 dont la fonction sera présentée ultérieurement. La chape 25 présente une paroi externe 251 de forme incurvée en portion de cercle. De plus, la chape 25 comprend un rebord supérieur 252 et un rebord inférieur 253 positionnés entre la paroi externe 251 de la chape 25 et la face interne 23a de chaque portion de support 23. La face externe de chaque portion de support 23 présente une empreinte 26 faisant sailli dans la face interne 23a. Chaque empreinte 26 est destinée à être liée en rotation à un volet 4.

L'élément de roue 1 comprend une pluralité de volets 4. Selon le mode de réalisation ici présenté, l'élément de roue 1 comprend autant de parois de support 23 que de volets 4.

Chaque volet 4 présente une face interne 40a et une face externe 40b.

La face interne 40a de chaque volet 4 est configurée pour être liée en rotation par rapport au support 23, l'axe de rotation 261 étant dans le logement 26. D'une manière particulièrement avantageuse, l'axe de rotation 261 de chaque volet 4 peut être défini de manière à ce que l'ouverture du volet 4 soit suffisante tout en restant dans un plan défini par une aile du véhicule.

Selon le mode de réalisation ici présenté, les volets 4 présentent des formes complémentaires adaptées pour combler l'espace entre le disque central 21 et l'anneau extérieur 22.

Chaque volet 4 présente une bordure périmétrique 41 en relief par rapport à la face interne 40a. Tel que cela sera précisé ultérieurement, la bordure périmétrique 41 est une surface de butée d'ouverture du volet 4.

En outre, le volet 4 présente une plaquette 42 émergeant de la bordure périmétrique 41. Tel que cela sera précisé ultérieurement, la plaquette 42 est une butée de fermeture du volet 4.

La face interne 40a du volet 4 présente un téton 43.

Le téton 43 est configuré pour être lié en rotation à une bielle 5.

L'élément de roue 1 comprend, en outre, des moyens d'actionnement des volets 4. Les moyens d'actionnement comprennent un bras 6 lié entre chaque portion de support 23 et le volet 4 correspondant. Le bras 6 présente une première extrémité 61 et une deuxième extrémité 62.

La première extrémité 61 du bras 6 est liée en rotation à la portion de support 23. La liaison pivot de la première extrémité 61 du bras avec la portion de support 23 permet au bras 6 de pivoter autour d'un axe VII de rotation du bras 6. L'axe VII de rotation du bras 6 est sensiblement perpendiculaire au plan VI de la roue I. Tel que cela sera détaillé ultérieurement, à l'usage, l'axe VII de rotation du bras 6 est sensiblement parallèle à un axe de rotation de la roue I. Le bras 6 est guidé en rotation dans la chape 25.

A proximité de la deuxième extrémité 62, le bras 6 comprend une masselotte 65. Tel que cela sera détaillé ultérieurement, la masselotte 65 permet de mettre en mouvement le bras 6.

La deuxième extrémité 62 du bras 6 est liée en rotation à la bielle 5. Ainsi, tel que cela sera détaillé ultérieurement, la rotation du bras 6 permet de déplacer le volet 4.

Les moyens d'actionnement comprennent aussi un organe élastique 8. Selon le mode de réalisation ici présenté, l'organe élastique 8 est un ressort à lame en alliage à mémoire de forme. D'une manière particulièrement avantageuse, l'alliage à mémoire de forme est un alliage se durcissant lorsque la température ambiante croît. Selon le mode de réalisation ici présenté, l'organe élastique 8 présente une forme en V avec deux extrémités libres. Une extrémité libre de l'organe élastique 8 est positionnée en appui contre le rebord supérieur 252 de la chape 25. L'autre extrémité libre de l'organe élastique 8 est en appui contre le bras 6.

Le fonctionnement de l'élément de roue 1 est le suivant.

La rotation des volets 4 par rapport aux portions de support 23 permet aux volets 4 d'être mobiles entre une position de fermeture et une position d'ouverture.

La position de fermeture est représentée sur les figures 1 et 3. En position de fermeture, la face externe 40b de chaque volet est positionnée sensiblement dans le plan VI de la roue I, ou dans un plan parallèle au plan VI de la roue I. En outre, comme on peut l'observer sur la figure 2, en position de fermeture, les volets 4 remplissent l'espace entre le disque central 21 et l'anneau extérieur 22, formant ainsi une surface sensiblement continue et sans aspérité.

En position de fermeture, la butée de fermeture du volet 4 est en appui contre l'anneau extérieur 22, qui a fonction de surface de butée de fermeture du corps 2, pour arrêter le pivot du volet 4 en position de fermeture.

La position d'ouverture est représentée sur les figures 2 et 4. En position d'ouverture, chaque volet 4 pivote par rapport aux portions de support 23, de sorte que la face externe 40b de chaque volet 4 est inclinée par rapport au plan VI de la roue I. En position d'ouverture, les volets 4 dégagent des ouvertures X permettant à un flux d'air de traverser l'élément de roue 1.

En position d'ouverture, la butée d'ouverture du volet 4 est en appui contre la portion d'appui 23, qui a fonction de surface de butée d'ouverture du corps 2, pour limiter le débattement du volet 4.

En conditions d'utilisation, l'élément de roue 1 recouvre le voile de la roue I. Selon le mode de réalisation ici présenté, l'élément de roue 1 est un élément rapporté qui peut être fixé à une jante de la roue I. Le disque central 21 et l'anneau extérieur 22 peuvent permettre d'accrocher l'élément de roue 1 à une jante.

Lorsque la roue I est immobile, l'effort exercé par l'organe élastique 8 entre le rebord supérieur 252 de la chape 52 et le bras 6 amène et maintient le volet 4 en position d'ouverture. Dans cette position, de l'air peut traverser l'élément de roue 1 pour refroidir un dispositif de freinage. De plus, dans cette position, l'élément de roue 1 présente une esthétique avantageuse avec les volets 4 ouverts.

Lorsque la roue I est en rotation, l'ensemble des éléments de la roue I sont soumis à une force centrifuge. La force centrifuge est proportionnelle à la vitesse de rotation de la roue I et à la masse de l'objet sur lequel elle s'applique. Le bras 6 est mobile en rotation par rapport au corps 2. L'organe élastique 8 exerce un effort sur le bras 6 qui tend à le maintenir dans une position dans laquelle le volet 4 est ouvert.

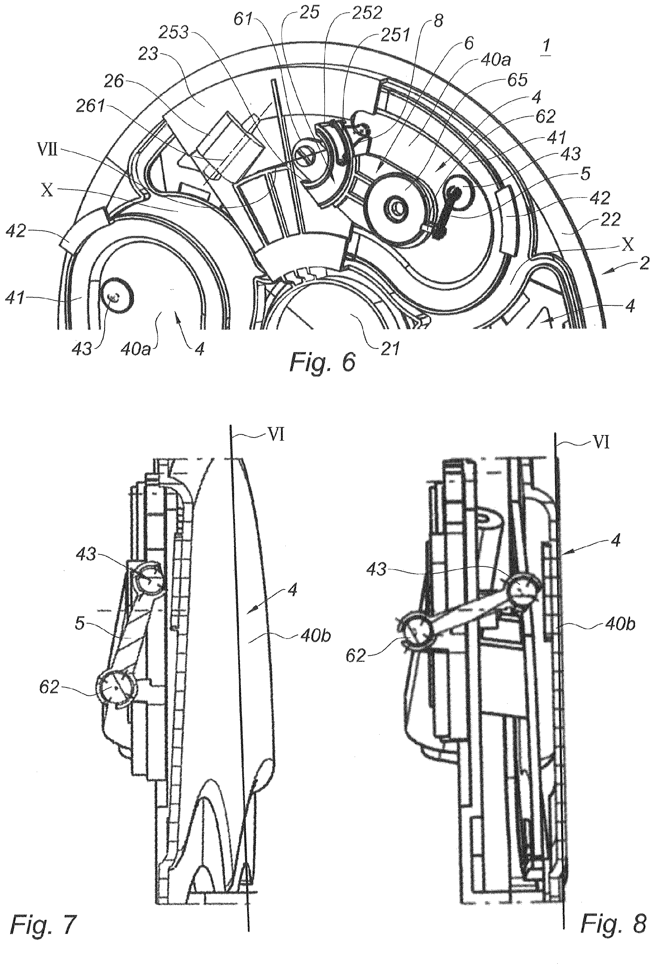

Lors de la rotation de la roue I, la force centrifuge qui s'exerce sur le bras 6 est contraire à l'effort exercé par l'organe élastique 8. La combinaison de la masse de la masselotte 65 avec une vitesse de rotation déterminée de la roue I permet à la force centrifuge de contrer l'effort de l'organe élastique 8 et de déplacer le bras 6 en direction du rebord supérieur 252 de la chape 25. Comme on peut le voir sur les figures 7 et 8, le déplacement du bras 6 provoque le déplacement de la bielle 5 et amène le volet 4 en position de fermeture. Ainsi, à partir d'une vitesse prédéterminée de rotation de la roue I, les volets 4 de l'élément de roue 1 pivotent en position de fermeture, ce qui permet d'optimiser l'aérodynamisme de la roue I. Avantageusement, le choix de la masse de la masselotte permet de déclencher le passage en position de fermeture à une vitesse de rotation choisie.

Lors de la rotation de la roue I, lorsque le dispositif de freinage adjacent à la roue I chauffe, la température ambiante augmente. L'augmentation de la température provoque le durcissement de l'alliage à mémoire de forme de l'organe élastique 8. En durcissant, l'organe élastique 8 exerce un effort de plus en plus important sur le bras 6, à l'encontre de la force centrifuge. A partir d'une température ambiante prédéterminée, pouvant être par exemple 80°C, l'organe élastique 8 exerce un effort suffisant pour contrer l'effet de la force centrifuge et déplacer le bras 6 pour amener le volet 4 en position d'ouverture. Ainsi, lorsque la température du dispositif de freinage augmente, les volets 4 pivotent en position d'ouverture, pour permettre le refroidissement du dispositif de freinage. La baisse de température, fait revenir l'alliage à mémoire de forme dans un état de souplesse et permet au bras 6 de faire passer le volet 4 en position de fermeture, lorsque la roue I est toujours en rotation.

Ainsi, l'invention propose un élément de roue qui permet de faire pivoter automatiquement les volets en position de fermeture lorsque la roue est en rotation et lorsque la température ambiante à proximité de la roue est sous un seuil déterminé, et qui permet de faire pivoter automatiquement les volets en position d'ouverture lorsque la roue est à l'arrêt ou lorsque la température ambiante à proximité de la roue dépasse un seuil déterminé.

Bien entendu, l'invention ne se limite pas à la seule forme d'exécution représentée ci-dessus à titre d'exemple, elle embrasse au contraire toutes les variantes de réalisation.

## Revendications

1. Elément de roue (1) d'un véhicule (II) destiné à être positionné sur une roue (I) comprenant un voile et une jante sur laquelle est reçu un pneumatique, la roue (I) définissant sensiblement un plan externe (VI) passant par un flanc externe de la jante, l'élément de roue comprenant :
(i) un corps (2) configuré pour être positionné sur le voile de la roue (I) et
(ii) au moins un volet (4) mobile en rotation par rapport au corps (2) entre une position de fermeture dans laquelle le volet (4) est positionné sensiblement dans le plan (VI) de la roue (I) et une position d'ouverture dans laquelle le volet (4) est positionné dans un plan incliné par rapport au plan (VI) de la roue (I), l'élément de roue (1) comprenant des moyens d'actionnement du, ou de chaque, volet (4) qui permettent de pivoter le volet (4) entre sa position de fermeture et sa position d'ouverture,
**caractérisé en ce que** les moyens d'actionnement comprennent un bras (6) et une bielle (5), le bras (6) présentant une première extrémité (61) liée en pivot au corps (2) et une deuxième extrémité (62) liée à la bielle (5), la bielle (5) étant liée au volet (4), la rotation du bras (6) permettant de déplacer la bielle (5) pour faire pivoter le volet (4) entre la position d'ouverture et la position de fermeture et
**en ce que** le bras (6) comprend une masselotte (65) positionnée à proximité de la deuxième extrémité (62) du bras (6), la masselotte (65) permettant la rotation du bras (6) et le déplacement du volet (4) en position de fermeture, sous l'effet de la force centrifuge due à la rotation de la roue (I).

2. Elément de roue (1) selon la revendication 1, **caractérisé en ce qu'**il comprend des moyens de liaison pivot du, ou de chaque, volet (4) sur le corps (2) et **en ce que** les moyens d'actionnement sont adaptés pour faire pivoter le volet (4) en fonction d'un ou plusieurs paramètres du groupe comprenant la vitesse de rotation de la roue et la température ambiante.

3. Elément de roue (1) selon l'une des revendications 1 ou 2, **caractérisé en ce que** le corps (2) comprend au moins une paroi de support (23) adaptée pour supporter en pivot le, ou chaque, volet (4).

4. Elément de roue selon la revendication 3, **caractérisé en ce que** la ou les parois de support (23) et le ou les volets (4) en position de fermeture sont coplanaires.

5. Elément de roue (1) selon l'une des revendications 1 à 4, **caractérisé en ce que** les moyens d'actionnement comprennent au moins un organe élastique (8) interposé entre le corps (2) et le bras (6), l'organe élastique (8) étant configuré pour exercer un effort sur le bras (6) pour faire pivoter le volet (4) en position d'ouverture.

6. Elément de roue (1) selon la revendication 5, **caractérisé en ce que** l'organe élastique (8) est constitué d'un matériau adapté pour se déformer en fonction de la température, faisant pivoter le volet (4) en position d'ouverture à partir d'une température prédéterminée.

7. Elément de roue (1) selon l'une des revendications 1 à 6, **caractérisé en ce que** le volet (4) présente une butée de fermeture adaptée pour appuyer sur une surface de butée de fermeture du corps (2) pour arrêter le pivot du volet (4) en position de fermeture.

8. Elément de roue (1) selon l'une des revendications 1 à 7, **caractérisé en ce que** le volet (4) présente une butée d'ouverture adaptée pour appuyer sur une surface de butée d'ouverture du corps (2) pour arrêter le pivot du volet (4) en position d'ouverture.

9. Elément de roue (1) selon l'une des revendications 1 à 8, **caractérisé en ce que** le corps (2) est un élément rapporté sur la roue.

10. Elément de roue (1) selon l'une des revendications 1 à 8, **caractérisé en ce que** le corps (2) est partie intégrante d'une jante monobloc comprenant un voile.

11. Véhicule automobile comprenant un élément de roue (1) selon l'une des revendications 1 à 10.

## Patentansprüche

1. Radelement (1) eines Fahrzeugs (II), das dazu bestimmt ist, auf einem Rad (I), eine Radschüssel und eine Felge umfassend, positioniert zu werden, auf der ein Reifen aufgenommen wird, wobei das Rad (I) im Wesentlichen eine äußere Ebene (VI) definiert, die über eine äußere Flanke der Felge führt, wobei das Radelement umfasst:
(i) einen Körper (2), der konfiguriert ist, um auf der Radschüssel des Rades (I) positioniert zu werden, und
(ii) mindestens eine im Verhältnis zum Körper (2) zwischen einer Schließposition, in der die Klappe (4) im Wesentlichen auf der Ebene (VI) des Rades (I) positioniert ist, und einer Öffnungsposition drehbewegliche Klappe (4), in der die Klappe (4) auf einer im Verhältnis zur Ebene (VI) des Rades (I) schrägen Ebene positioniert ist, wobei das Radelement (1) Mittel zum Betätigen der, oder jeder Klappe (4) umfasst, die es ermöglichen, die Klappe (4) zwischen ihrer Schließposition und ihrer Öffnungsposition zu schwenken,
**dadurch gekennzeichnet, dass** die Mittel zum Betätigen einen Arm (6) und ein Triebgestänge (5) umfassen, wobei der Arm (6) ein erstes Ende (61) aufweist, das schwenkbar mit dem Körper (2) verbunden ist, und ein zweites Ende (62), das mit dem Triebgestänge (5) verbunden ist, wobei das Triebgestänge (5) mit der Klappe (4) verbunden ist, wobei es die Drehung des Armes (6) ermöglicht, das Triebgestänge (5) zu verschieben, um die Klappe (4) zwischen der Öffnungsposition und der Schließposition schwenken zu lassen, und
dadurch, dass der Arm (6) ein Fliehgewicht (65) umfasst, das in der Nähe des zweiten Endes (62) des Armes (6) positioniert ist, wobei das Fliehgewicht (65) unter der Wirkung der Zentrifugalkraft aufgrund der Drehung des Rades (I) die Drehung des Armes (6) und die Verschiebung der Klappe (4) in die Schließposition ermöglicht.

2. Radelement (1) nach Anspruch 1, **dadurch gekennzeichnet, dass** es Mittel zur Schwenkverbindung der oder jeder Klappe (4) auf dem Körper (2) umfasst, und dadurch, dass Mittel zum Betätigen angepasst sind, um die Klappe (4) in Abhängigkeit von einem oder mehreren Parametern der Gruppe schwenken zu lassen, welche die Drehgeschwindigkeit des Rades und der Umgebungstemperatur umfasst.

3. Radelement (1) nach einem der Ansprüche 1 oder 2, **dadurch gekennzeichnet, dass** der Körper (2) mindestens eine Stützwand (23) umfasst, die angepasst ist, um die oder jede Klappe (4) schwenkend zu stützen.

4. Radelement nach Anspruch 3, **dadurch gekennzeichnet, dass** die Stützwand oder Stützwände (23) und die Klappe oder Klappen (4) in der Schließposition komplanar sind.

5. Radelement (1) nach einem der Ansprüche 1 bis 4, **dadurch gekennzeichnet, dass** die Mittel zum Betätigen mindestens ein elastisches Organ (8) umfassen, das zwischen den Körper (2) und den Arm (6) eingesetzt ist, wobei das elastische Organ (8) konfiguriert ist, um eine Kraft auf den Arm (6) auszuüben, um die Klappe (4) in die Öffnungsposition schwenken zu lassen.

6. Radelement (1) nach Anspruch 5, **dadurch gekennzeichnet, dass** das elastische Organ (8) aus einem Material besteht, das angepasst ist, um sich in Abhängigkeit von der Temperatur zu verformen, wodurch die Klappe (4) ab einer vorab bestimmten Temperatur in die Öffnungsposition geschwenkt wird.

7. Radelement (1) nach einem der Ansprüche 1 bis 6, **dadurch gekennzeichnet, dass** die Klappe (4) einen Schließanschlag aufweist, der angepasst ist, um sich an eine Schließanschlagoberfläche des Körpers (2) anzulegen, um den Schwenk der Klappe (4) in die Schließposition zu stoppen.

8. Radelement (1) nach einem der Ansprüche 1 bis 7, **dadurch gekennzeichnet, dass** die Klappe (4) einen Öffnungsanschlag aufweist, der angepasst ist, um sich an eine Öffnungsanschlagoberfläche des Körpers (2) anzulegen, um den Schwenk der Klappe (4) in die Öffnungsposition zu stoppen.

9. Radelement (1) nach einem der Ansprüche 1 bis 8, **dadurch gekennzeichnet, dass** der Körper (2) ein auf das Rad beigebrachtes Element ist.

10. Radelement (1) nach einem der Ansprüche 1 bis 8, **dadurch gekennzeichnet, dass** der Körper (2) fester Bestandteil einer einteiligen Felge ist, die eine Radschüssel umfasst.

11. Kraftfahrzeug, das ein Radelement (1) nach einem der Ansprüche 1 bis 10 umfasst.

## Claims

1. A wheel element (1) of a vehicle (II) intended to be positioned on a wheel (I) comprising a disc and a rim on which a tire is received, the wheel (I) substantially defining an outer plane (VI) passing through an outer sidewall of the rim, the wheel element comprising:
(i) a body (2) configured to be positioned on the disc of the wheel (I) and
(ii) at least one flap (4) movable in rotation relative to the body (2) between a closing position in which the flap (4) is substantially positioned in the plane (VI) of the wheel (I) and an opening position in which the flap (4) is positioned in a plane inclined relative to the plane (VI) of the wheel (I), the wheel element (1) comprising means for actuating the, or each, flap (4) which allow pivoting the flap (4) between its closing position and its opening position,
**characterized in that** the actuation means comprise an arm (6) and a connecting rod (5), the arm (6) having a first end (61) pivotally connected to the body (2) and a second end (62) connected to the connecting rod (5), the connecting rod (5) being connected to the flap (4), the rotation of the arm (6) allowing displacing the connecting rod (5) to pivot the flap (4) between the opening position and the closing position and
**in that** the arm (6) comprises a flyweight (65) positioned in the vicinity of the second end (62) of the arm (6), the flyweight (65) enabling the rotation of the arm (6) and the displacement of the flap (4) in the closing position, by the effect of the centrifugal force due to the rotation of the wheel (I).

2. The wheel element (1) according to claim 1, **characterized in that** it comprises means for pivotally connecting the, or each, flap (4) on the body (2) and **in that** the actuation means are adapted to make the flap (4) pivot depending on one or several parameter(s) of the group comprising the rotational speed of the wheel and ambient temperature.

3. The wheel element (1) according to any of claims 1 or 2, **characterized in that** the body (2) comprises at least one support wall (23) adapted to pivotally support the, or each, flap (4).

4. The wheel element according to claim 3, **characterized in that** the support wall(s) (23) and the flap(s) (4) in the closing position are coplanar.

5. The wheel element (1) according to any of claims 1 to 4, **characterized in that** the actuation means comprise at least one elastic member (8) interposed between the body (2) and the arm (6), the elastic member (8) being configured to exert a force on the arm (6) to make the flap (4) pivot in the opening position.

6. The wheel element (1) according to claim 5, **characterized in that** the elastic member (8) consists of a material adapted to be deform depending on the temperature, making the flap (4) pivot in the opening position from a predetermined temperature.

7. The wheel element (1) according to any of claims 1 to 6, **characterized in that** the flap (4) has a closing stop adapted to press on a closing stop surface of the body (2) to stop the pivot of the flap (4) in the closing position.

8. The wheel element (1) according to any of claims 1 to 7, **characterized in that** the flap (4) has an opening stop adapted to press on an opening stop surface of the body (2) to stop the pivot of the flap (4) in the opening position.

9. The wheel element (1) according to any of claims 1 to 8, **characterized in that** the body (2) is an element attached on the wheel.

10. The wheel element (1) according to any of claims 1 to 8, **characterized in that** the body (2) is an integral part of a one-piece rim comprising a disc.

11. A motor vehicle comprising a wheel element (1) according to any of claims 1 to 10.
